# DEMANDE DE BREVET EUROPEEN

(11) **EP 1 387 447 A1**
(43) Date de publication de la demande: **04.02.2004**
(21) Numéro de dépôt: 03291822.9
(22) Date de dépôt: 23.07.2003
(51) Int. Cl.: H01R 27/02, B60R 16/02

(54) **Système de raccordement d'un capteur de vitesse et d'un témoin d'usure de frein, au reste des circuits d'un véhicule**

(30) Priorité: 29.07.2002 FR 0209622
(71) Demandeur: Peugeot Citroen Automobiles SA, 78943 Vélizy-Villacoublay Cedex (FR)
(72) Inventeur: Grosjean, Olivier, 92300 Levallois Perret (FR)
(74) Mandataire: Habasque, Etienne Joel Jean-François

(57) **Abrégé**

Ce système de raccordement d'un capteur de vitesse (2) et d'au moins un témoin d'usure de freins (3), associés à une roue de véhicule automobile, au reste des circuits de celui-ci, est caractérisé en ce qu'il comporte des moyens formant passe-fil étanches (5), pour le câble de raccordement du capteur de vitesse, destinés à coopérer avec des moyens de fixation sur le véhicule et comportant un connecteur intégré (7) de raccordement du ou de chaque témoin d'usure de frein (3).

## Description

La présente invention concerne un système de raccordement d'un capteur de vitesse et d'au moins un témoin d'usure de frein, associés à une roue d'un véhicule automobile, au reste des circuits de celui-ci.

On sait que dans l'état de la technique, les capteurs de vitesse de roues des véhicules automobiles, sont fixés sur des pivots ou des bras du véhicule et sont raccordés au reste des circuits électriques de celui-ci, c'est-à-dire en particulier au faisceau électrique du véhicule, par un câble électrique également appelé « cheveu » dans l'état de la technique.

Ce câble présente une partie dynamique permettant de passer de la structure de roue à la caisse du véhicule.

Différents points d'accrochage de ce câble sur le véhicule utilisent des moyens formant passe-fil étanches, qui sont en fait des pièces en matériau isolant, comme par exemple en caoutchouc, rapportées ou surmoulées sur le câble et qui sont accrochées sur des pattes de fixation sur des éléments de la roue et de la caisse du véhicule.

Dans certaines configurations de véhicule, un ou plusieurs témoins d'usure de frein sont également utilisés.

Le raccordement de ce témoin au reste des circuits du véhicule, se fait également par l'intermédiaire d'un câble qui pour des raisons de réduction du parcours de ce câble, est associé d'une façon ou d'une autre, aux moyens de raccordement du capteur de vitesse de roue au faisceau du véhicule.

Les moyens de raccordement prennent alors la forme d'un Y dont une extrémité à deux branches permet d'associer les deux éléments, à savoir le capteur de vitesse de roue et le témoin d'usure de frein, pour assurer à l'autre extrémité, la connexion avec le faisceau du véhicule.

Cependant, une telle structure présente un certain nombre d'inconvénients dans la mesure où il convient de sortir par exemple des moyens formant passe-fil, le câble de raccordement du témoin d'usure de frein et de rajouter sur celui-ci, une protection, afin de garantir l'étanchéité entre tous ces éléments.

Ceci se traduit alors par la réalisation d'un ensemble de pièces relativement complexes nécessitant un processus de fabrication à plusieurs étapes.

Le but de l'invention est donc de résoudre ces problèmes.

A cet effet, l'invention a pour objet un système de raccordement d'un capteur de vitesse et d'au moins un témoin d'usure de freins, associés à une roue de véhicule automobile, au reste des circuits de celui-ci, caractérisé en ce qu'il comporte des moyens formant passe-fil étanches, pour le câble de raccordement du capteur de vitesse, destinés à coopérer avec des moyens de fixation sur le véhicule et comportant un connecteur intégré de raccordement du ou de chaque témoin d'usure de frein.

Selon d'autres caractéristiques :
- les moyens formant passe-fil comportent des moyens de mise à la masse ;
- les moyens de mise à la masse comprennent un conducteur de masse dont l'extrémité libre comporte une cosse de mise à la masse ;
- les moyens de mise à la masse comprennent une patte de mise à la masse et de fixation des moyens formant passe-fil sur le reste du véhicule.

L'invention sera mieux comprise à la lecture de la description qui va suivre, donnée uniquement à titre d'exemple et faite en se référant aux dessins annexés, sur lesquels :
- la Fig.1 représente un exemple de réalisation d'un système de raccordement selon l'invention ;
- la Fig.2 représente une vue en perspective de moyens formant passe-fil entrant dans la constitution d'un tel système ;
- la Fig.3 représente une vue détaillée de tels moyens, selon une première variante de réalisation ;
- la Fig.4 représente une vue analogue à la figure 3, selon une deuxième variante de réalisation ; et
- la Fig.5 représente une vue analogue à la figure 3, selon une troisième variante de réalisation.

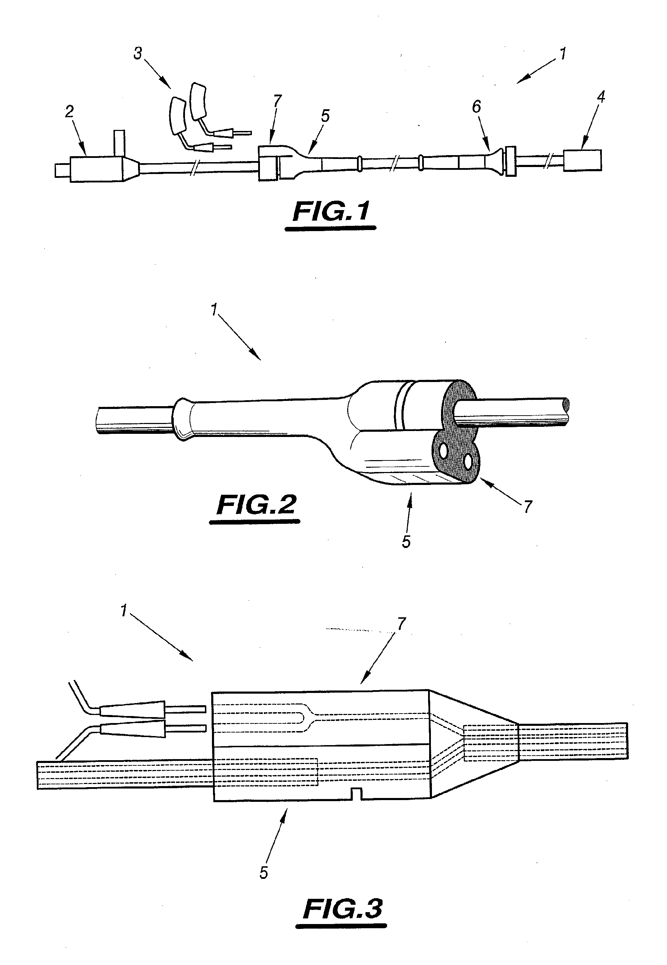

On a en effet représenté sur la figure 1, un système de raccordement d'un capteur de vitesse et d'un témoin d'usure de frein, associés à une roue de véhicule automobile, au reste des circuits de celui-ci.

Sur cette figure, le système de raccordement est désigné par la référence générale 1, et permet donc de raccorder, grâce à des câbles, un capteur de vitesse de roue, désigné par la référence générale 2, et un ou plusieurs témoins d'usure de frein désignés de façon générale par la référence 3, au reste des circuits du véhicule, à travers un connecteur de faisceau désigné par la référence générale 4.

Ce système de raccordement comporte des moyens formant passe-fil étanches, par exemple au nombre de deux, dont l'un est désigné par la référence générale 5 et l'autre par la référence générale 6.

Les moyens formant passe-fil 5 sont alors adaptés pour recevoir les conducteurs ou le câble de raccordement du capteur de vitesse et sont destinés de façon classique, à coopérer avec des moyens de fixation sur le véhicule et comportent selon l'invention, un connecteur intégré de raccordement du ou des témoins d'usure de frein.

Ce connecteur intégré est désigné par la référence générale 7 sur cette figure 1 et est donc adapté pour recevoir des moyens de connexion complémentaires raccordés à au moins un témoin d'usure de frein, associé par exemple à une plaquette de frein correspondante.

Dans l'exemple illustré sur les figures 1 à 3, le connecteur intégré de raccordement 7 comporte des moyens de raccordement de deux témoins d'usure de frein associés à deux plaquettes de frein de la roue correspondante du véhicule.

Il va de soi bien entendu que d'autres modes de réalisation peuvent être envisagés.

Comme cela est illustré sur ces figures, le connecteur 7 est donc intégré aux moyens formant passe-fil 5, ce qui permet de résoudre les problèmes évoqués précédemment.

Les moyens de raccordement se présentent alors sous la forme de fiches raccordées aux témoins adaptées pour s'engager dans des prises correspondantes du connecteur.

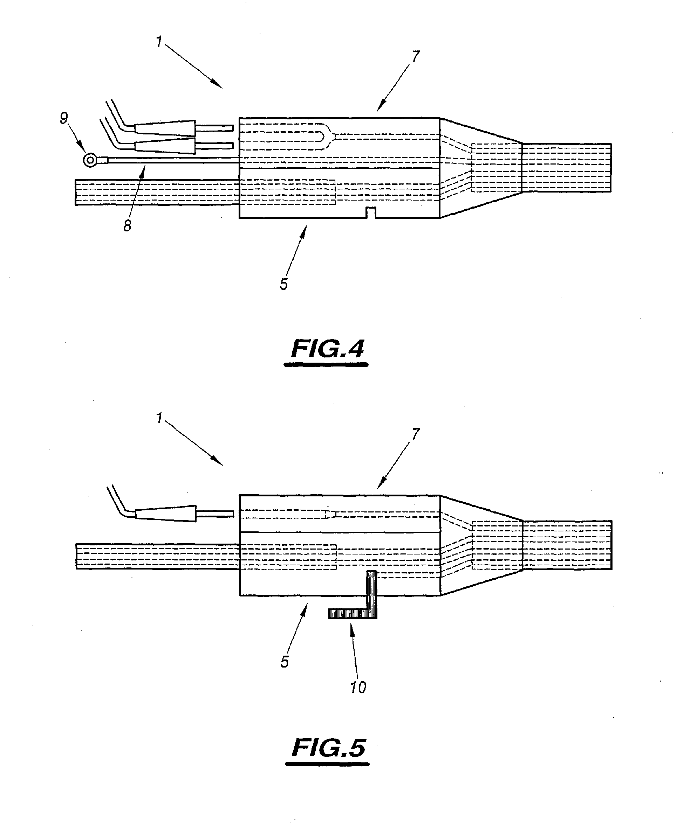

Comme cela est illustré sur les figures 4 et 5, des moyens de mise à la masse peuvent également être prévus.

C'est ainsi par exemple que sur la figure 4, ces moyens de mise à la masse sont formés par un conducteur ou une tresse de masse désigné par la référence générale 8, dont l'extrémité libre est associée à une cosse de mise à la masse 9.

Dans cet exemple de réalisation, le connecteur intégré 7 comporte deux prises pour recevoir deux fiches de raccordement de deux témoins d'usure de frein associés à chacune des deux plaquettes de frein de la roue correspondante.

Comme cela est illustré sur la figure 5, les moyens de mise à la masse peuvent également être formés par une patte conductrice de mise à la masse désignée par la référence générale 10 sur cette figure, et pouvant également former des moyens de fixation des moyens formant passe-fil 5 sur le reste de la structure du véhicule.

Dans cet exemple illustré sur la figure 5, le connecteur intégré 7 comporte une seule prise de réception d'une fiche de raccordement d'un seul témoin d'usure de frein.

Bien entendu, d'autres modes de réalisation en particulier des moyens de mise à la masse peuvent être envisagés.

On conçoit alors qu'une telle structure présente un certain nombre d'avantages par rapport aux structures de l'état de la technique, dans la mesure où sa réalisation est plus simple, plus fiable et plus compacte.

## Revendications

1. Système de raccordement d'un capteur de vitesse et d'au moins un témoin d'usure de freins, associés à une roue de véhicule automobile, au reste des circuits de celui-ci, **caractérisé en ce qu'**il comporte des moyens formant passe-fil étanches (5), pour le câble de raccordement du capteur de vitesse (2), destinés à coopérer avec des moyens de fixation sur le véhicule et comportant un connecteur intégré (7) de raccordement du ou de chaque témoin d'usure de frein (3).

2. Système selon la revendication 1, **caractérisé en ce que** les moyens formant passe-fil (5) comportent des moyens de mise à la masse.

3. Système selon la revendication 2, **caractérisé en ce que** les moyens de mise à la masse comprennent un conducteur de masse (8) dont l'extrémité libre comporte une cosse de mise à la masse (9).

4. Système selon la revendication 1 ou 2, **caractérisé en ce que** les moyens de mise à la masse comprennent une patte (10) de mise à la masse et de fixation des moyens formant passe-fil (5) sur le reste du véhicule.
